# EUROPÄISCHE PATENTSCHRIFT

(11) **EP 3 386 707 B1**
(45) Veröffentlichungstag und Bekanntmachung des Hinweises auf die Patenterteilung: **02.12.2020**
(21) Anmeldenummer: 16805422.9
(22) Anmeldetag: 02.12.2016
(51) Int. Cl.: B29C 45/14, B60R 21/205, B60R 13/02

(54) **VERFAHREN ZUR HERSTELLUNG EINER INSTRUMENTENTAFEL FÜR EIN KRAFTFAHRZEUG**
METHOD FOR PRODUCING A DASHBOARD FOR A MOTOR VEHICLE
PROCÉDÉ DE FABRICATION D'UN TABLEAU DE BORD POUR UN VÉHICULE AUTOMOBILE

(30) Priorität: 10.12.2015 DE 102015224815
(43) Veröffentlichungstag der Anmeldung: 17.10.2018
(73) Patentinhaber: Volkswagen Aktiengesellschaft, 38440 Wolfsburg (DE)
(72) Erfinder: MEDING, Marcus, 38471 Rühen (DE); RODENBERG, Denis, 38350 Helmstedt (DE)
(86) Internationale Anmeldenummer: PCT/EP2016/079559
(87) Internationale Veröffentlichungsnummer: WO 2017/097673

(56) Entgegenhaltungen:
- WO-A1-2012/085070
- DE-A1-102012 022 249

## Beschreibung

Die Erfindung betrifft ein Verfahren zur Herstellung einer Instrumententafel für ein Kraftfahrzeug nach dem Oberbegriff des Patentanspruches 1 sowie eine Instrumententafel nach dem Patentanspruch 24.

Die Instrumententafel eines Kraftfahrzeugs weist in gängiger Praxis einen formstabilen Instrumententafel-Träger auf, der üblicherweise aus einem glasfaserverstärkten Polypropylen hergestellt ist, und zwar zum Beispiel in einem Thermoplastschaumgieß-Verfahren (TSG-Verfahren). Auf dem Instrumententafel-Träger kann exemplarisch eine dem Fahrzeuginnenraum zugewandte Slush-Haut mit einer Narbung sowie eine zwischen der Slush-Haut und dem Instrumententafel-Träger geschaltete PU-Schaumschicht appliziert werden.

Aus der DE 10 2012 022 249 A1 ist eine Instrumententafel bekannt, bei der der Instrumententafel-Träger aus einem naturfaserverstärkten Kunststoff gefertigt ist. Am naturfaserverstärkten Instrumententafel-Träger ist ein Anschlusselement, beispielsweise eine Versteifung, angebunden, wobei der Verbund zwischen dem Instrumententafel-Träger und dem Anschlusselement durch ein gespritztes, gegossenes und/oder geschäumtes Verbindungselement erfolgt, das stoff- und/oder formschlüssig mit dem Anschlusselement und stoff- und/oder formschlüssig mit dem Instrumententafel-Träger zusammenwirkt. Aus der DE 101 60 185 A1 ist eine weitere Instrumententafel mit einem naturfaserverstärkten Instrumententafel-Träger bekannt. In dessen Kunststoffmatrix ist ein PA-Kunststoffrahmen eingebettet. Der PA-Kunststoffrahmen bildet eine Befestigungsstruktur, an der ein Airbagmodul montierbar ist.

In einem bekannten Verfahren zur Herstellung einer solchen Instrumententafel wird zunächst ein Faserhalbzeug aus Natur- und Thermoplastfasern in einem Heizschritt bis über die Schmelztemperatur der Thermoplastfasern erwärmt, wodurch sich eine aufgeschmolzene Kunststoffmatrix bildet, in der die Naturfasern eingebettet sind. Anschließend wird in einem Formpressschritt das Faserhalbzeug mit der aufgeschmolzenen Kunststoffmatrix zu dem naturfaserverstärkten Instrumententafel-Träger umgeformt.

In gängiger Praxis weist die Instrumententafel eine Hutze sowie einen Airbaghalterahmen auf. Diese sind bei einem Instrumententafel-Träger aus glasfaserverstärkten Polypropylen materialeinheitlich und einstückig während des Formpressschrittes am Instrumententafel-Träger ausbildbar. Derart komplexe Geometrien können jedoch bei einem naturfaserverstärkten Instrumententafel-Träger nur eingeschränkt im Formpressschritt realisiert werden. Beim Einsatz von naturfaserverstärkten Kunststoffen können nämlich im Formpressschritt nicht beliebige Tiefziehgrade umgesetzt werden, da es ansonsten zu Rissen im Instrumententafel-Träger kommen kann.

Aus der DE 10 2004 054 228 A1 ist ein Verfahren und eine Vorrichtung zur Herstellung eines Verbundteiles bekannt. Das Verbundteil kann ein Türinnenverkleidungsteil einer Fahrzeugtür sein, in der ein Lautsprecher integriert ist. Der Lautsprecher weist ein Lautsprecher-Gitter auf, das in einem Haltering gehaltert ist. Das Türinnenverkleidungsteil wird aus einem Naturfaser-Rohling hergestellt, in dem Naturfasern in einer Kunststoffmatrix eingebettet sind. An dem Naturfaser-Rohling wird eine den Haltering bildende Kunststoff-Spritzmasse angespritzt, und zwar in einem Kunststoff-Spritzgießschritt. Der Naturfaser-Rohling ist geschlossenflächig hergestellt und weist daher keine Ausnehmung auf, an deren Öffnungsrandbereich ein Anspritzprofil zum Anspritzen der Haltering-Spritzmasse ausgebildet ist. Gleiches trifft auch auf das aus der DE 10 2012 022 249 A1 bekannte Fahrzeuginnenausstattungsteil zu. Das Fahrzeuginnenausstattungsteil weist einen geschlossenflächigen Naturfaserträger auf, in dem Naturfasern in einer Kunststoffmatrix eingebettet sind. Der Naturfaser-Träger ist ebenfalls geschlossenflächig ohne Ausnehmung ausgebildet, an deren Öffnungsrand ein Anspritzprofil für ein im Kunststoff-Spritzgießschritt anzuspritzendes Funktionselement bereitgestellt ist. Aus der DE 20 2007 007 498 U1 ist ein weiteres Formteil bekannt, das aus einem Kunststoff-Träger, einer Dekorschicht und einer duktilen Einlage aus duktilem Material hergestellt ist.

Aus der WO 2012/085 070 A1 ist ein gattungsgemäßes Verfahren zur Herstellung von oberflächenendbearbeiteten Leichtbauteilen mit hohem Naturfaseranteil und integrierten Befestigungselementen bekannt. Aus der DE 10 2012 022 249 A1 ist ein Fahrzeuginnenausstattungsteil bekannt.

Die Aufgabe der Erfindung besteht darin, eine Instrumententafel mit einem naturfaserverstärkten Instrumententafel-Träger bereitzustellen, der prozesssicher sowie in einfacher Weise herstellbar ist.

Die Aufgabe ist durch die Merkmale des Patentanspruches 1 oder 24 gelöst. Bevorzugte Weiterbildungen der Erfindung sind in den Unteransprüchen offenbart.

Die Erfindung beruht auf dem Sachverhalt, dass bei Verwendung eines naturfaserverstärkten Instrumententafel-Trägers geometrisch komplexe Geometrien, etwa eine Hutze oder ein Airbaghalterahmen, prozesstechnisch nur schwierig im Formpressschritt aus dem naturfaserverstärkten Instrumententafel-Träger ausformbar sind. Vor diesem Hintergrund wird gemäß dem Patentanspruch 1 ein Funktionselement, insbesondere die Hutze und/oder der Airbaghalterahmen, nicht mehr im Formpressschritt materialeinheitlich und einstückig angeformt, sondern vielmehr in einem zusätzlichen Kunststoff-Spritzgießschritt unmittelbar an einen im Formpressschritt hergestellten Instrumententafel-Grundkörper angespritzt. Auf diese Weise können erfindungsgemäß Materialrisse aufgrund zu hoher Tiefziehgrade in der Instrumententafel verhindert werden.

Die Erfindung ist speziell bei einer Realisierung des Funktionselements als ein Airbaghalterahmen von Vorteil: Hier liegt die Herausforderung darin, auch beim Auslösen des Airbags eine sichere Anbindung an den Träger zu gewährleisten. Die Formschlussverbindung mit dem Instrumententafel-Träger ist deswegen besonders wichtig, da sie auch bei einwirkenden Kräften den Airbagrahmen an dem Instrumententafel-Träger halten muss.

Der obige Formpressschritt erfolgt in einer Formpresse, in deren Kavität das noch unverformte Faserhalbzeug mit aufgeschmolzener Kunststoffmatrix eingelegt wird. Anschließend wird die Formpresse-Kavität unter Umformung des Faserhalbzeugs zu dem plattenförmigen Instrumententafel-Träger der Instrumententafel umgeformt. Der erfindungsgemäße Kunststoff-Spritzgießschritt kann in einer technischen Umsetzung ebenfalls in der Formpresse erfolgen, und zwar während oder unmittelbar nach dem Formpressschritt. Hierzu können die Formpressen-Werkzeuge als Hybridwerkzeuge ausgeführt sein, die es ermöglichen, während oder nach dem Formpressschritt das Funktionselement am Instrumententafel-Träger anzuspritzen. In diesem Fall kann der naturfaserverstärkte Instrumententafel-Träger zusammen mit dem angespritzten Funktionselement gemeinsam abkühlen. Dies führt zu einer gleichmäßigeren Schwindung und zu einer besseren Bauteilqualität.

Der plattenförmige, naturfaserverstärkte Instrumententafel-Träger kann für das Funktionselement, das heißt die Hutze und/oder der Airbaghalterahmen, eine Material-Ausnehmung aufweisen, in der das Funktionselement positionierbar ist. Im Hinblick auf eine hohe Verbindungsfestigkeit zwischen dem jeweiligen Anspritzteil (das heißt Hutze und/oder Airbaghalterahmen) weist erfindungsgemäß der Instrumententafel-Träger am Öffnungsrandbereich der Ausnehmung ein spezielles Anspritzprofil auf, an dem die Hutze oder der Airbaghalterahmen anspritzbar ist.

Sowohl die Hutze als auch der Airbaghalterahmen können eine durchgängige Deckwand aufweisen, die die obige Grundkörper-Ausnehmung im naturfaserverstärkten Instrumententafel-Träger überdeckt.

Nachfolgend wird die Geometrie des Anspritzprofils des naturfaserverstärkten Instrumententafel-Trägers beschrieben: Erfindungsgemäß weist das Anspritzprofil einen Stützschenkel auf, der von einer Instrumententafel-Grundfläche um einen Höhenversatz abgestuft ist und der die Grundkörper-Ausnehmung für die Hutze oder für den Airbaghalterahmen vollständig umzieht. Auf dem abgestuften Stützschenkel ist das Funktionselement mit einem Randsteg, insbesondere vollflächig, abgestützt. Bevorzugt ist der Höhenversatz zwischen dem abgestuften Stützschenkel und dem Instrumententafel-Grundkörper identisch mit der Materialdicke des auf dem Stützschenkel abgestützten Randstegs der Hutze oder des Airbaghalterahmens. Auf diese Weise wird ein flächenbündiger Übergang zwischen dem Randsteg und dem Instrumententafel-Grundkörper erzielt. Bei einem nachfolgenden Kaschieren des Instrumententafel-Trägers mit zum Beispiel daran angespritzter Hutze/Airbaghalterahmen können somit vorteilhaft Abzeichnungen in der sichtseitigen Slush-Haut vermieden werden, die sich ansonsten am Übergang zwischen dem angespritzten Randsteg und dem Instrumententafel-Grundkörper ergeben können.

Im obigen Anspritzprofil des Instrumententafel-Trägers kann der abgestufte Stützschenkel an einer vertikalen Stufenwand in die Instrumententafel-Grundfläche übergehen. Der Spritzmasse-Randsteg des Funktionselements erstreckt sich dabei bis in Stoßverbindung mit der vertikalen Stufenwand des Anspritzprofils.

Wie oben erwähnt, umzieht der Anspritzprofil-Stützschenkel die Grundkörper-Ausnehmung. Der Stützschenkel weist dabei eine innere Randkante auf, die als Öffnungsrand die Grundkörper-Ausnehmung begrenzt. Erfindungsgemäß wird der Stützschenkel an seiner inneren Randkante mit einer vertikalen Anlagewand verlängert, die Bestandteil des Anspritzprofils ist. Die vertikale Anlagewand kann zusammen mit dem Stützschenkel die Grundkörper-Ausnehmung zumindest teilweise oder vollständig umziehen und in stoffschlüssiger Anspritz-Verbindung mit dem Funktionselement sein. Erfindungsgemäß ragt von der Unterseite der Hutzen-Deckwand eine Hutzen-Seitenwand ab. Die Hutzen-Seitenwand kann unter Bildung einer Doppelwandstruktur an die oben erwähnte Anlagewand des Anspritzprofils angespritzt sein.

Erfindungsgemäß ist das Anspritzprofil, insbesondere die Anlagewand des Anspritzprofils, mit zumindest eine Fließöffnung versehen (zum Beispiel durch Stanzung), durch die im Kunststoff-Spritzgießschritt die flüssige Kunststoff-Ausgangskomponente (das heißt die Spritzmasse) strömt, und zwar unter Bildung eines ausgeweiteten Spritzmasse-Kopfes auf der, der Funktionselement-Seitenwand gegenüberliegenden Seite der Anlagewand des Anspritzprofils.

Erfindungsgemäß weist das Anspritzprofil eine Mehrzahl solcher Fließöffnungen auf, die sich umfangsseitig um die Grundkörper-Ausnehmung erstrecken, und zwar mit den dazugehörigen Spritzmasse-Köpfen. Erfindungsgemäß ist die Mehrzahl der Spritzmasse-Köpfe über zusätzlich angespritzte Spritzmasse-Stege miteinander verbunden, wodurch die Spritzmasse über einen zusätzlichen Formschluss mit dem am naturfaserverstärkten Instrumententafel-Träger verbunden ist.

Zur weiteren Steigerung der Formschlussverbindung zwischen der Spritzmasse und dem Instrumententafel-Träger kann dessen Anspritzprofil einen zusätzlichen Wandabschnitt aufweisen, der zusammen mit der Anlagewand und dem Stützschenkel im Querschnitt ein U-Profil bildet, das auf der von der Ausnehmung abgewandten Seite nach außen offen ist. In diesem Fall kann die Spritzmasse unter Bildung einer Doppelwandstruktur nicht nur am Stützschenkel und an der Anlagewand sondern zusätzlich auch an dem Wandabschnitt angespritzt sein, wodurch die Spritzmasse (das heißt zum Beispiel die Hutzen-Seitenwand) das U-förmige Anspritzprofil außenseitig C-förmig umgreift.

Zur Erhöhung der Bauteilsteifigkeit kann das angespritzte Funktionselement zwischen seinem Randsteg, der auf dem Stützschenkel des trägerseitigen Anspritzprofils abgestützt ist, und seiner Seitenwand, die einen Airbag-Schusskanal begrenzt, einen Inneneckbereich aufspannen, in dem umfangsseitig voneinander beabstandete Rippen im Spritzgießschritt angeformt werden. In diesem Fall kann der Stützschenkel des trägerseitigen Anpritzprofils Schlitze aufweisen, durch die die Versteifungsrippen bis zum Randsteg des Funktionselements geführt sind.

In einer Ausführungsform kann der Kunststoff-Spritzgießschritt in einem, von der Formpresse separaten Spritzgießwerkzeug erfolgen. Zur Vorbereitung des Kunststoff-Spritzgießschrittes wird der in der Formpresse geformte Instrumententafel-Grundkörper dem bereits oben erwähnten Stanzschritt zugeführt, bei dem der geformte Instrumententafel-Grundkörper gestanzt wird, um zum Beispiel Fließöffnungen einzuarbeiten. Anschließend wird der geformte Instrumententafel-Grundkörper als ein Einlegerteil in die Werkzeugkavität des Spritzgießwerkzeuges eingelegt und daraufhin die Werkzeugkavität geschlossen. Die Werkzeugkavität ist so gestaltet, dass eine Teilkavität freibleibt, die die Negativform des anzuspritzenden Funktionselementes wiedergibt. Bei der Durchführung des Kunststoff-Spritzgießschrittes wird eine flüssige Kunststoff-Spritzmasse unter Druck und Wärme in die Teilkavität eingespritzt und anschließend ausgehärtet. Das Spritzgießwerkzeug besteht aus zumindest zwei Werkzeugteilen, deren Formflächen die Werkzeugkavität definieren.

Beim Einlegen des vorgeformten Instrumententafel-Grundkörpers besteht die Problematik darin, eine definierte Lage in der Werkzeugkavität aufrechtzuerhalten, und zwar insbesondere auch während des Spritzgießvorganges, bei dem die flüssige Kunststoffschmelze mit hohem Druck in die Kavität injiziert wird. Von daher ist es vorteilhaft, wenn zumindest an einer der Formflächen zumindest ein, bevorzugt mehrere Positionierstifte ausgebildet sind. Jeder dieser Positionierstifte presst den vorgeformten Instrumententafel-Grundkörper gegen eine gegenüberliegende Formfläche lagesicher an.

In einer technischen Umsetzung kann der Positionierstift so angeordnet sein, dass der die, vor dem Spritzgießschritt noch freie Teilkavität durchragt und in unmittelbarer Druckanlage mit dem Stützschenkel des Instrumententafel-Grundkörpers ist. In diesem Fall ist der Positionierstift nahe der die Grundkörper-Ausnehmung begrenzenden inneren Randkante angeordnet. Auf diese Weise wird verhindert, dass die flüssige Kunststoffschmelze aufgrund des hohen Einspritzdruckes den Instrumententafel-Grundkörper in eine undefinierte Lage verschiebt.

Alternativ oder zusätzlich kann der Positionierstift auch außerhalb der Teilkavität angeordnet sein, und zwar in einem, von der inneren Randkante entfernten Bereich. In diesem Fall wird der Positionierstift nicht von der Kunststoffschmelze umströmt, wie es oben der Fall ist. Mittels des außerhalb der Teilkavität angeordneten Positionierstiftes können speziell Aufwölbungen des Instrumententafel-Grundkörpers vermieden werden.

Im Hinblick auf eine einwandfreie stoffschlüssige Verbindung zwischen dem Funktionsteil und dem Instrumententafel-Grundkörper ist es zudem bevorzugt, wenn der Positionierstift zwischen den oben erwähnten Schlitzen, durch die im fertiggestellten Bauteil die Funktionselement-Rippen geführt sind, gegen den Instrumententafel-Grundkörper drückt.

Im Hinblick auf eine einwandfreie Fixierung während des Kunststoff-Spritzgießschrittes ist es bevorzugt, wenn die Positionierstifte über eine vordefinierte Eindrücktiefe in den Instrumententafel-Grundkörper eintauchen. Die Eindrücktiefe kann im Zehntel-Millimeterbereich liegen, und zwar insbesondere in einem Bereich von 0 bis 1 mm, wodurch der Instrumententafel-Grundkörper überdrückt wird und der Kunststoffschmelze-Fluss kontrolliert in die Werkzeugkavität eingebracht werden kann.

Nach erfolgtem Kunststoff-Spritzgießschritt wird der Instrumententafel-Träger mit einer Kaschierung versehen. Die Kaschierung weist bevorzugt eine, dem Fahrzeug-Innenraum zugewandte Slush-Haut sowie eine zwischen der Slush-Haut und der Oberseite des Instrumententafel-Trägers angeordnete Schaumschicht auf.

Wie oben erwähnt, werden die Positionierstifte mit einer Eindrücktiefe in den Instrumententafel-Grundkörper gedrückt, und zwar unter Bildung von Vertiefungen im Instrumententafel-Grundkörper. Damit auf der sichtseitigen Kaschierung keine Abzeichnungen entstehen, ist es bevorzugt, wenn die Positionierstifte einen Durchmesser zwischen 0,5 mm und 10 mm aufweisen, damit sich keine Abzeichnungen auf der Instrumententafel-Sichtseite bilden. Zudem ist es bevorzugt, wenn der jeweilige Positionierstift eine Konizität aufweist, und zwar bevorzugt zwischen 0,5° und 20°, wodurch eine leichtgängige Entformung nach dem Kunststoff-Spritzgießschritt stattfinden kann.

Der Positionierstift kann in einer ersten Ausführungsvariante starr an der Formfläche des Werkzeugteils des Spritzgießwerkzeuges ausgebildet sein. Alternativ dazu kann der Positionierstift mit Bezug auf die Formfläche des Werkzeugteils verstellbar sein. In diesem Fall kann der verstellbare Positionierstift durch Aufbau einer Druckkraft der beim Füllen der Werkzeugkavität mit dem Positionierstift in Kontakt tretenden Kunststoffschmelze zurück in das Werkzeugteil gedrückt werden, so dass dieser in etwa flächenbündig mit der angrenzenden Formfläche zurückgedrückt ist. In diesem Fall können die oben erwähnten Vertiefungen im Instrumententafel-Grundkörper vermieden werden. Der Positionierstift kann beispielhaft federbetätigt, pneumatisch oder hydraulisch gesteuert werden.

Um die Bauteilsteifigkeit der Funktionselement-Deckwand zu erhöhen, kann diese an ihrer Unterseite mit einer zum Beispiel fachwerkartigen oder wabenförmigen Verstärkungsstruktur ausgebildet sein. Bevorzugt ist es, wenn die Verstärkungsstruktur im Kunststoff-Spritzgießschritt materialeinheitlich und einstückig an der Funktionselement-Deckwand angeformt wird.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Darstellung einen naturfaserverstärkten Instrumententafel-Träger einer Instrumententafel eines zweispurigen Kraftfahrzeugs, an dem eine Hutze und ein Airbaghalterahmen angespritzt sind;
- Fig. 2: eine Schnittdarstellung entlang der Schnittebene A-A aus der Fig. 1;
- Fig. 3a bis 3d: jeweils Ansichten, die die Prozessschritte zur Herstellung des in der Fig. 1 oder 2 gezeigten Instrumententafel-Trägers veranschaulichen;
- Fig. 4: eine Schnittdarstellung entlang der Schnittebene B-B aus der Fig. 1; und
- Fig. 5: in einer Ansicht entsprechend der Fig. 4 die Anbindung zwischen einem Airbaghalterahmen und dem naturfaserverstärkten Instrumententafel-Träger in einer im Vergleich zur Fig. 4 versetzten Schnittebene;
- Figuren 6 bis 9: Ansichten, die einen Kunststoff-Spritzgießschritt veranschaulichen, der in einem von der Formpresse separaten Spritzgießwerkzeug durchgeführt wird;
- Figur 10: in einer Ansicht von unten einen fertiggestellten Instrumententafel-Träger;
- Figur 11: in einer Ansicht entsprechend der Figur 7 einen verstellbar im Spritzgießwerkzeug angeordneten Positionierstift; und
- Figur 12: in einer perspektivischen Darstellung von unten einen Instrumententafel-Träger mit einer wabenartigen bzw. fachwerkartigen Verstärkungsstruktur;
- Figur 13 und 14: jeweils Schnittdarstellungen einer fertigmontierten Instrumententafel;
- Figur 15: eine Teilansicht auf die sichtabgewandte Unterseite der Instrumententafel;
- Figur 16: die in der Figur 15 gezeigte Verstärkungsstruktur in einer Schnittdarstellung; und
- Figur 17: eine Ansicht entsprechend der Figur 3a.

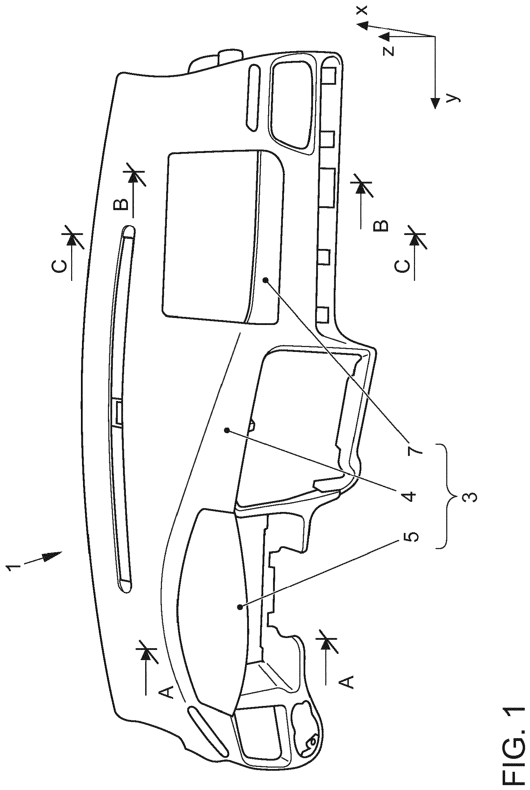

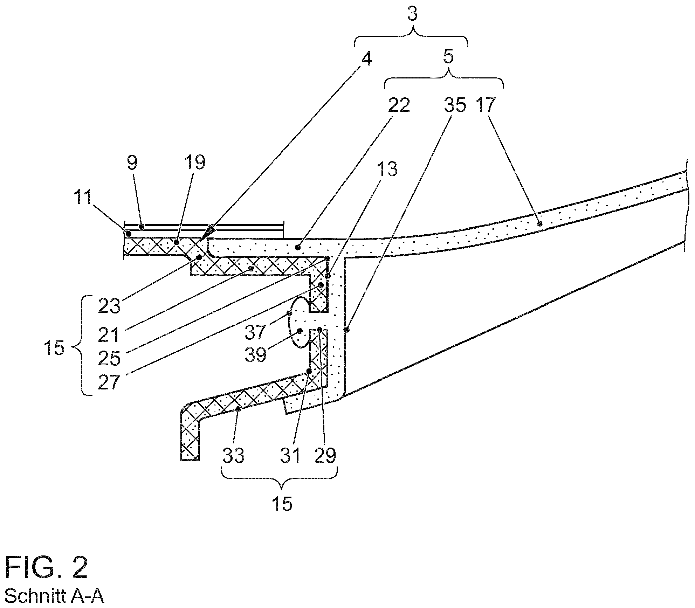

In der Fig. 1 ist eine Instrumententafel 1 für ein zweispuriges Kraftfahrzeug gezeigt. Die Instrumententafel 1 weist einen Instrumententafel-Träger 3 auf, der aus einem naturfaserverstärkten Instrumententafel-Grundkörper 4, einer daran angespritzten Hutze 5 sowie einem daran angespritzten Airbaghalterahmen 7 aufgebaut ist. In der Fig. 1 ist die Instrumententafel 1 ohne Kaschierung gezeigt. Diese ist in der Fig. 2 lediglich abschnittsweise angedeutet, und zwar mit einer, dem Fahrzeuginnenraum zugewandten Slush-Haut 9 sowie einer zwischen der Slush-Haut 9 und der Oberseite des Instrumententafel-Trägers 3 angeordneten PU-Schaumschicht 11.

Anhand der Fig. 2 wird die Anbindung zwischen dem Instrumententafel-Grundkörper 4 und der daran angespritzten Hutze 5 beschrieben. Hierzu weist der Instrumententafel-Grundkörper 4 eine Grundkörper-Ausnehmung 13 auf, an deren Öffnungsrandbereich ein U-förmiges Anspritzprofil 15 ausgebildet ist, an dem die Spritzmasse der Hutze 5 angespritzt ist. Die Hutze 5 weist in der Fig. 2 eine in der Fahrzeughochrichtung z nach oben ausgewölbte Spritzmasse-Deckwand 17 auf, die die Grundkörper-Ausnehmung 13 im Instrumententafel-Grundkörper 4 überdeckt.

Das U-förmige Anspritzprofil 15 weist in der Fig. 2 einen von einer oberen Instrumententafel-Grundfläche 19 um einen Höhenversatz abgestuften oder zurückgesetzten Stützschenkel 21 auf. Der Stützschenkel 21 ist in etwa koplanar zur Instrumententafel-Grundfläche 19 ausgerichtet und erstreckt sich durchgängig entlang des Öffnungsrandes der Grundkörper-Ausnehmung 13. Der Stützschenkel 21 des Anspritzprofils 15 geht in der Fig. 2 an einer vertikalen Stufenwand 23 in die Instrumententafel-Grundfläche 19 über. Am gegenüberliegenden Ende weist der Stützschenkel 21 eine innere Randkante 25 auf, die die Grundkörper-Ausnehmung 13 begrenzt. An der inneren Randkante 25 des Anspritzprofils 15 schließt sich eine vertikale Anlagewand 27 an, in der später beschriebene Fließöffnungen 29 eingearbeitet sind. Die Anlagewand 27 des Anspritzprofils 15 geht im weiteren Verlauf vertikal nach unten an einer Übergangskante 31 in einen Wandabschnitt 33 über, der zusammen mit der Anlagewand 27 und dem Stützschenkel 21 das U-förmige Anspritzprofil 15 bildet, an dem die Kunststoff-Spritzmasse der Hutze 5 unter Bildung einer Doppelwandstruktur angespritzt ist. Hierzu weist die Hutze 5 eine Spritzmasse-Seitenwand 35 auf, die von der Unterseite der Spritzmasse-Deckwand 17 vertikal nach unten abragt und sowohl mit der Anlagewand 27 als auch mit dem Wandabschnitt 33 des Anspritzprofils 15 stoffschlüssig in Verbindung ist. Durch die oben erwähnte Fließöffnung 29 in der Anlagewand 27 des Anspritzprofils 15 strömt im Spritzgießschritt die flüssige Spritzmasse, wodurch sich auf der, der Spritzmasse-Seitenwand 35 gegenüberliegenden Seite der Anspritzprofil-Anlagewand 27 ein ausgeweiteter Spritzmasse-Kopf 37 ergibt. Dieser ist über angedeutete Spritzmasse-Stege 39 mit weiteren Spritzmasse-Köpfen 37 verbunden, die umfangsverteilt um die Grundkörper-Ausnehmung 13 angeordnet sind.

Insgesamt ergibt sich somit auf der von der Grundkörper-Ausnehmung 13 abgewandten Seite ein nach außen offenes Anspritzprofil 15, das von der Spritzmasse der Hutze 5 C-förmig umfasst ist, wodurch sich eine hohe Verbindungsfestigkeit zwischen der Hutze 5 und dem Instrumententafel-Grundkörper 4 ergibt.

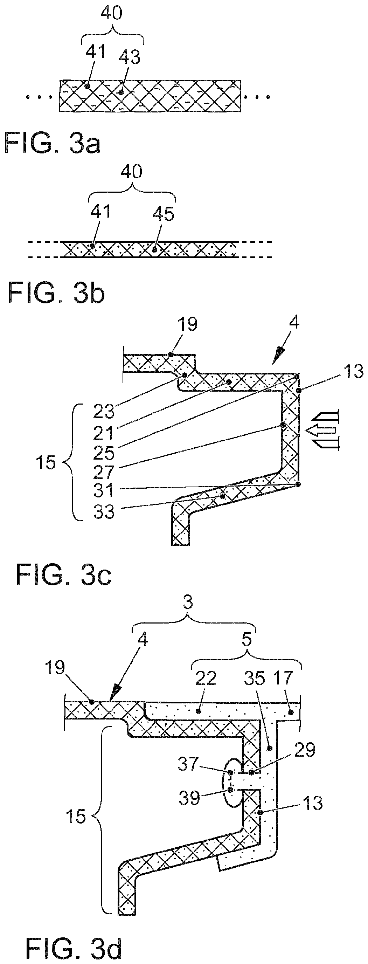

Nachfolgend wird anhand der Fig. 3a bis 3d die Herstellung des Instrumententafel-Trägers 3 der Instrumententafel 1 beschrieben: So wird zunächst ein Faserhalbzeug 40 aus Naturfasern 41 und Thermoplastfasern 43 bereitgestellt, zum Beispiel eine plattenförmige Fasermatte, in der die Natur- und Thermoplastfasern 41, 43 zum Beispiel mittels einer Nadelungstechnik miteinander verbunden sind (Fig. 3a). Das Faserhalbzeug 40 kann in einer Heizpresse auf ca. 200°C erwärmt und verpresst werden, und zwar bis über die Schmelztemperatur der Thermoplastfasern 43, wodurch sich eine aufgeschmolzene Kunststoffmatrix 45 ergibt, in der die Naturfasern 41 eingebettet sind (Fig. 3b).

Anschließend erfolgt ein Formpressschritt, bei dem das plattenförmige Faserhalbzeug 40 zum Instrumententafel-Grundkörper 4 umgeformt wird. Im Formpressschritt (Fig. 3c) wird zudem auch das Anspritzprofil 15 für die Spritzmasse der Hutze 5 geformt. Anschließend erfolgt der Kunststoff-Spritzgießschritt (Fig. 3d), in dem die Spritzmasse der Hutze 5 am Anspritzprofil 15 des Instrumententafel-Grundkörpers 4 angespritzt wird.

Die Prozessschritte zur Anbindung der Airbaghalterahmen-Spritzmasse am Instrumententafel-Grundkörper 4 sind identisch zu den in der Fig. 3a bis 3d gezeigten Prozessschritten.

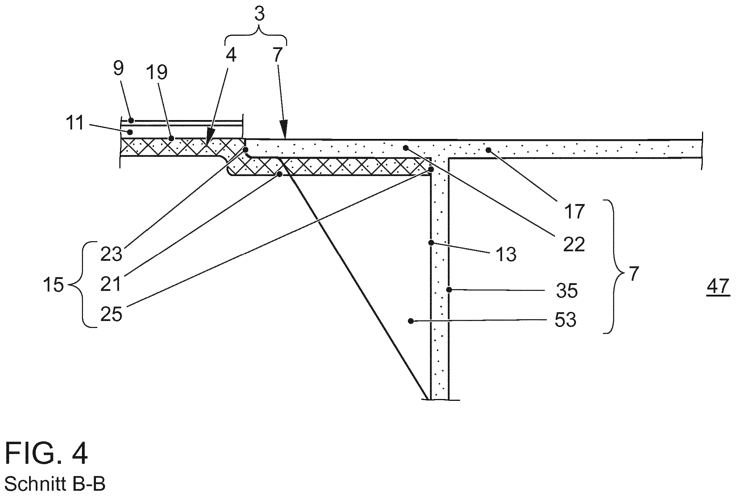

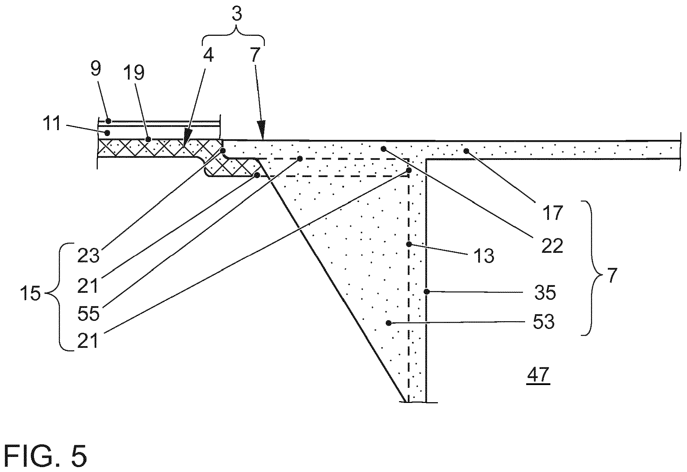

In den Fig. 4 und 5 ist die Anbindung des Airbaghalterahmens 7 am Instrumententafel-Grundkörper 4 gezeigt. Wie die Hutze 5 weist auch der Airbaghalterahmen 7 in der Fig. 4 oder 5 eine Spritzmasse-Seitenwand 35 auf. Diese umgibt in der Fig. 4 oder 5 einen Airbag-Schusskanal 47, der oberseitig mit einer als Airbagdeckel wirkenden Spritzmasse-Deckwand 17 begrenzt ist. Der Airbagdeckel 17 ist seitlich nach außen über den Schusskanal 47 hinaus mit dem Randsteg 22 verlängert, der auf einem Stützschenkel 21 des Anspritzprofils 15 abgestützt ist. In den Fig. 4 oder 5 ist das Anspritzprofil 15 aus der vertikalen Stufenwand 23, dem Stützschenkel 21, sowie der inneren Randkante 25 gebildet.

Zwischen der Spritzmasse-Seitenwand 35 und dem Spritzmasse-Randsteg 22 ist ein Inneneckbereich aufgespannt, in dem umfangsseitig voneinander beabstandete Rippen 53 angeordnet sind, die sowohl am Spritzmasse-Randsteg 22 als auch an der Spritzmasse-Seitenwand 35 des Airbaghalterahmens 7 angeformt sind. Im Stützschenkel 21 des Instrumententafel-Träger-Anspritzprofils 15 sind entsprechend Schlitze 55 eingearbeitet, durch die die Rippen 53 bis zum Spritzmasse-Randsteg 22 des Airbaghalterahmens 7 geführt sind.

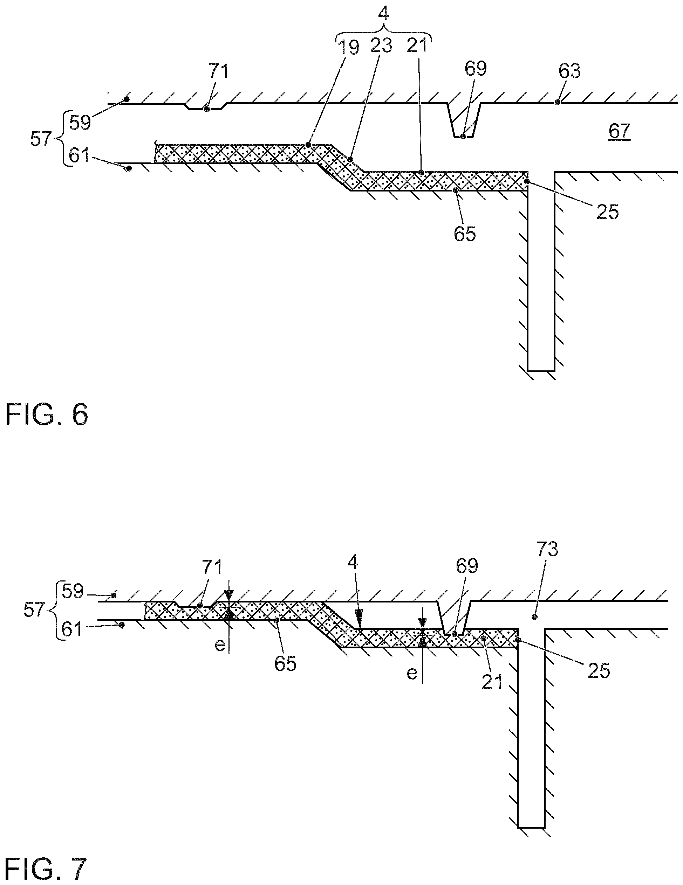

Anhand der nachfolgenden Figuren 6 bis 9 ist ein Kunststoff-Spritzgießschritt veranschaulicht, der in einem von der Formpresse separaten Spritzgießwerkzeug 57 durchgeführt wird. Das Spritzgießwerkzeug 57 besteht aus einer oberen Werkzeughälfte 59 und einer unteren Werkzeughälfte 61, deren Formflächen 63, 65 eine Werkzeugkavität 67 definieren. Zur Vorbereitung des Spritzgießschrittes ist in der Figur 6 der geformte Instrumententafel-Grundkörper 4 als ein Einlegerteil in die noch offene Werkzeugkavität 67 des Spritzgießwerkzeuges 57 eingelegt. In der Formfläche 63 der oberen Werkzeughälfte 59 sind zwei Positionierstifte 69, 71 starr angeformt. Mit deren Hilfe kann bei geschlossener Werkzeugkavität 67 der Instrumententafel-Grundkörper 4 in der Werkzeugkavität 67 lagefixiert werden.

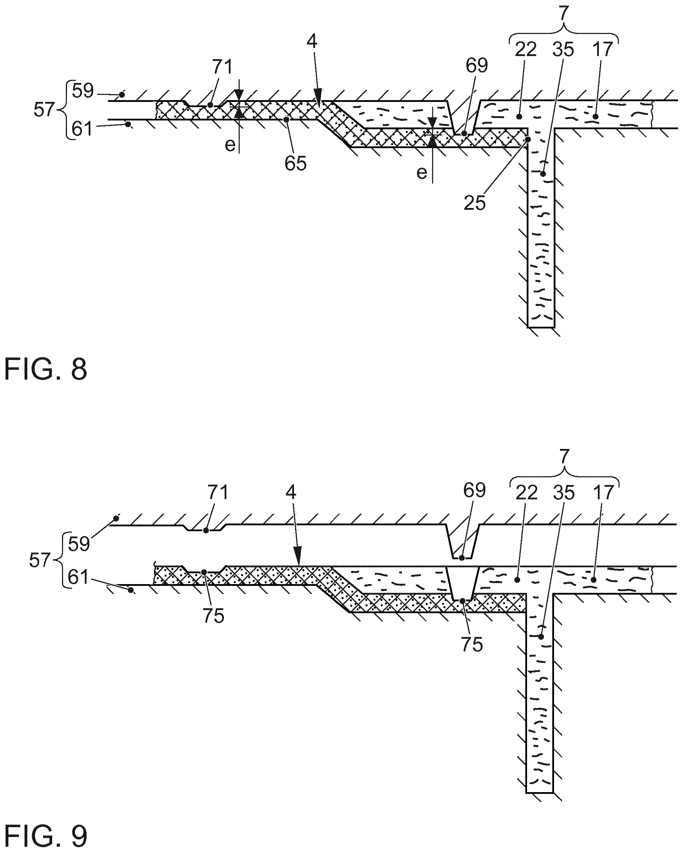

In der Figur 7 ist die Werkzeugkavität 67 geschlossen dargestellt. Demzufolge bleibt eine Teilkavität 73 frei, die die Negativform des Airbaghalterahmens 7 nachbildet. Die Positionierstifte 69, 71 pressen dabei den Instrumententafel-Grundkörper 4 lagesicher gegen die gegenüberliegende Formfläche 65 der unteren Werkzeughälfte 61, wobei die beiden Positionierstifte 69, 71 mit einer Eindrücktiefe e in das Material des Instrumententafel-Grundkörpers 4 eindrücken, und zwar unter Bildung von Vertiefungen 75 (Fig. 9). Um Abzeichnungen in der sichtseitigen Kaschierung der fertiggestellten Instrumententafel zu vermeiden, liegt die Eindrücktiefe e in einem Zehntel-Millimeterbereich und weisen die beiden Positionierstifte 69, 71 einen Durchmesser auf, der zwischen 0,5 mm und 10 mm liegt. Zusätzlich sind die Positionierstifte 69, 71 mit einer Konizität ausgeführt, um eine leichte Entformung zu gewährleisten, wie sie in der Figur 9 veranschaulicht ist.

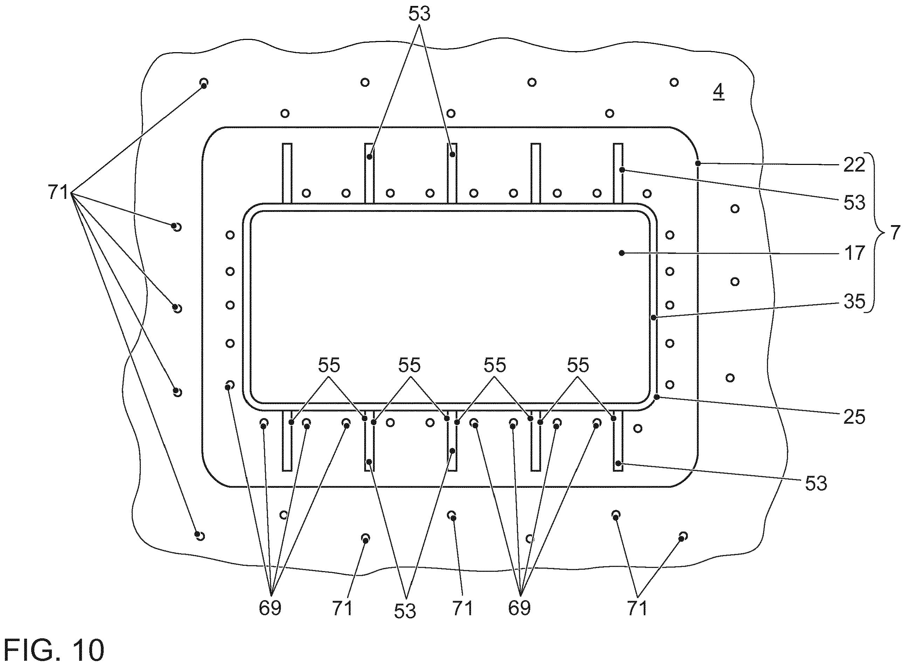

In der Figur 10 ist die fertiggestellte Instrumententafel in einer Ansicht von unten gezeigt, wobei die sich umfangsseitig um die innere Randkante 25 des Instrumententafel-Grundkörpers 4 verteilten kreisförmigen Punkte die Lage sämtlicher Positionierstifte 69, 71 während des Kunststoff-Spritzgießschrittes wiedergeben. Demzufolge sind die Positionierstifte 69 nahe der, die Grundkörper-Ausnehmung 13 begrenzenden inneren Randkante 25 angeordnet. In diesem Fall durchragen die Positionierstifte 69 die freie Teilkavität 73, wie es in der Figur 7 gezeigt ist. Im Gegensatz dazu sind die Positionierstifte 71 außerhalb der Teilkavität 73 angeordnet, das heißt nicht von der Kunststoffschmelze umströmt, wie es bei dem Positionierstiften 69 der Fall ist. Die Positionierstifte 69 sind gemäß der Figur 10 zwischen den Schlitzen 55 positioniert, durch die die Rippen 53 des Airbaghalterahmens 7 geführt sind.

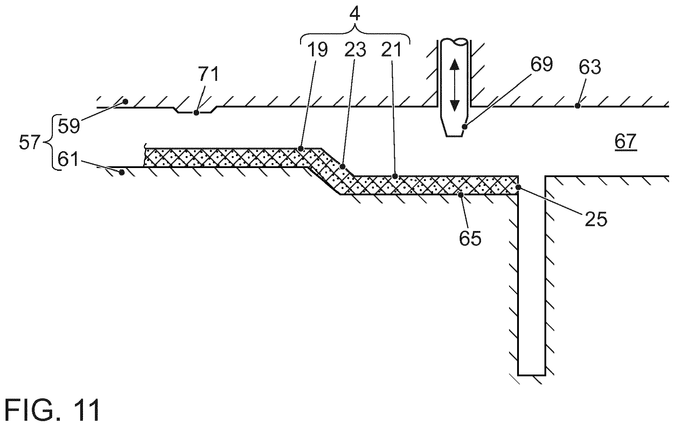

In der Figur 11 ist eine Ansicht entsprechend der Figur 7 gezeigt. Im Unterschied zur Figur 7 ist in der Figur 11 der Positionierstift 69 nicht mehr starr an der Formfläche 63 der oberen Werkzeughälfte 59 angeformt, sondern vielmehr in der Hochrichtung verstellbar gelagert.

Sobald beim Spritzgießschritt aufgrund der Kunststoffschmelze eine Druckkraft am Positionierstift 69 aufgebaut wird, wird dieser in die obere Werkzeughälfte 59 zurückgedrängt, wodurch die Gefahr von Abzeichnungen an der fertiggestellten Instrumententafel beseitigt ist.

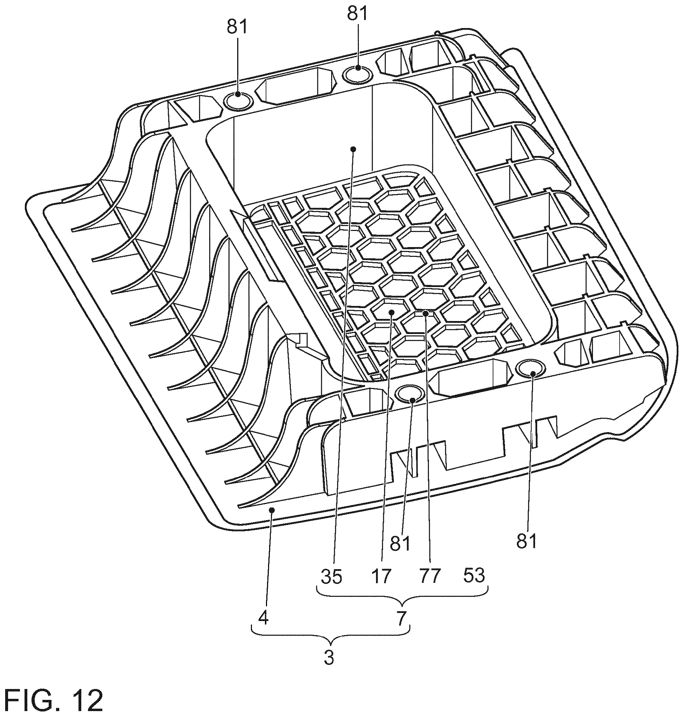

In der Figur 12 ist die fertiggestellte Instrumententafel in einer perspektivischen Darstellung von unten gezeigt. Demzufolge weist die Deckwand 17 des Airbaghalterahmens 7 an ihrer Unterseite eine wabenartige oder fachwerkartige Verstärkungsstruktur 77 auf. Die Verstärkungsstruktur 77 ist materialeinheitlich und einstückig an der Deckwand 17 angeformt. Die Verstärkungsstruktur 77 wird dabei zusammen mit der Deckwand 17 im Spritzgießschritt hergestellt.

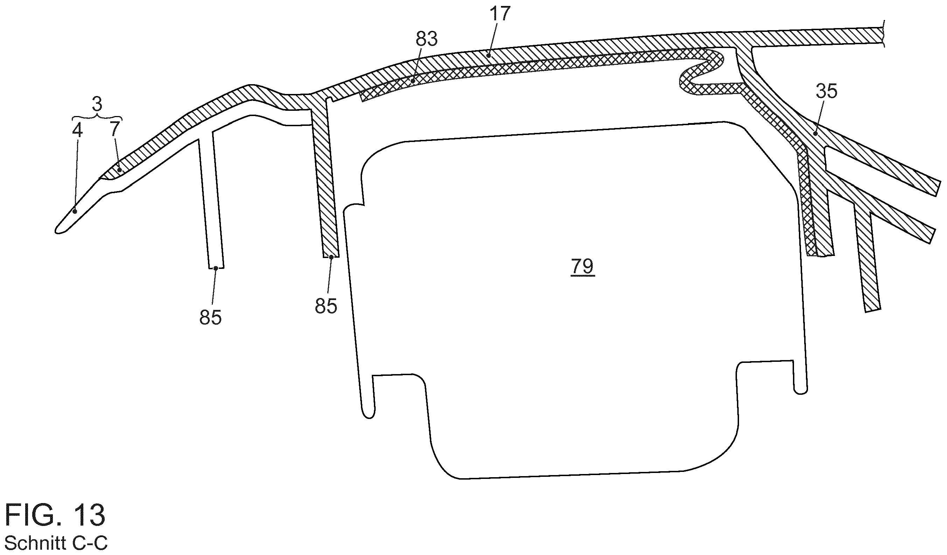

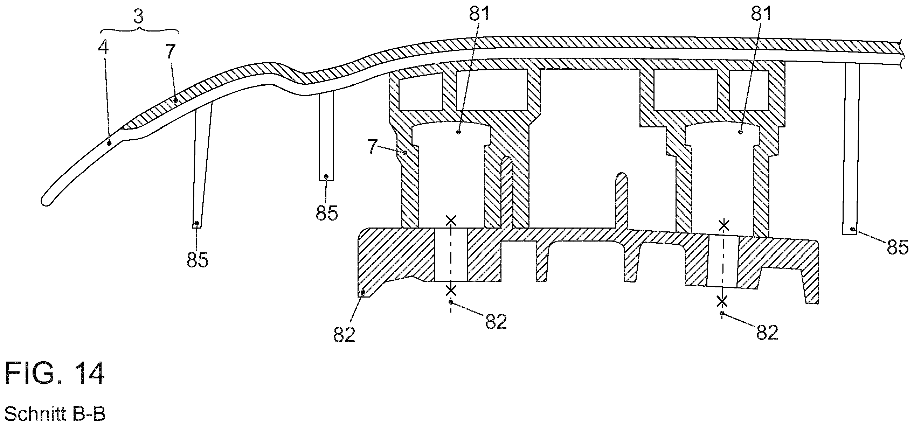

In den Figuren 13 und 14 sind entlang der Schnittebenen B-B und C-C aus der Figur 1 Schnittdarstellungen durch den Instrumententafel-Träger 3 gezeigt. Demzufolge ist ein Airbagmodul 79 am Airbaghalterahmen 7 gehaltert. Zur Halterung des Airbagmoduls 79 sind in dem Airbaghalterahmen 7 insgesamt vier Gewindebuchsen 81 (Figuren 12 oder 14) in das Kunststoffmaterial des Airbaghalterahmens 7 eingebettet. Die vier Gewindebuchsen 81 werden gedreht oder durch einen Fließprozess hergestellt. Die Gewindebuchsen 81 weisen jeweils ein Innengewinde für die Verschraubung 82 (Figur 14) des Airbagmoduls 79 am Airbaghalterahmen 7 auf. Das Einlegen der Gewindebuchsen 81 in das Spritzgießwerkzeug 57 (Figuren 6 bis 9) erfolgt durch manuelles Einsetzen bzw. im Serienprozess durch Roboterbestückung. Die Gewindebuchsen 81 werden im Spritzgießwerkzeug 57 formschlüssig eingesetzt und zum Beispiel durch Magnete lagerichtig vorpositioniert. Anschließend wird die jeweilige Gewindebuchse 81 durch die geschmolzene Kunststoffmasse formschlüssig umspritzt.

Wie aus der Figur 13 weiter hervorgeht, ist ein Halteband 83 sowohl am Airbagdeckel 17 als auch an der seitlichen Schusskanalwand 35 angegossen. Am Inneneckbereich zwischen dem Airbagdeckel 17 und der Schusskanalwand 35 weist das Halteband 83 eine freie Halteband-Schlaufe auf. Diese bildet bei einer Airbag-Aktivierung ein Scharnier, um das der sich öffnende Airbagdeckel 17 schwenkt.

Das Halteband 83 ist in der Fläche durchlässig für das Kunststoffmaterial und wird in derselben Einlegeoperation wie die Gewindebuchsen 81 in das Spritzgießwerkzeug 57 eingesetzt. Im Spritzgießprozess durchdringt die Kunststoffmasse das durchlässige Halteband-Gewebe und ist nach dem Auskühlen formschlüssig im Airbaghalterahmen 7 integriert. Wie bereits oben erwähnt, ist im Umklappbereich das Halteband 83 mit einer freien Halteband-Schlaufe freigelegt, so dass sich das Halteband 83 dort längen kann, um den erforderlichen Weg zum Umklappen des Airbagdeckels 17 freizugeben. Bei dieser Konstruktion ist die Funktion des Haltebands 83 stets gewahrt, wenn beim Umklappen des Airbagdeckels 17 die formschlüssige Verbindung zwischen dem Airbagdeckel 17 und dem Halteband 83 bestehen bleibt und keine deutlichen Ablösungen durch Abscheren entstehen.

Hohe Temperaturen verursachen eine Ausdehnung im Material und somit einen Verzug. Die im Airbagbereich bereitgestellte Verstärkungsstruktur 77 (Figur 12) wirkt dem entgegen. Dadurch werden Einfallsstellen vermieden, so dass die optische Anmutung auf der Sichtseite erhalten bleibt. Darüber hinaus können weitere Versteifungsmaßnahmen erforderlich sein, um einen herstellerseitigen Missbrauchstest durch Krafteinwirkung oberhalb des Airbagdeckels 17 zu bestehen. Somit kann der Airbagbereich weniger stark eingedrückt werden und bleibt der Aufklappbereich weiterhin im nicht-sichtbaren Kaschierbereich im Unterbau vorhanden. Zudem erhöht die Verstärkungsstruktur 77 den Formschluss des Gewebe-Haltebands 83 mit dem Airbagdeckel 17. Dies ist speziell beim Ablösen und Umklappen des Airbagdeckels 17 von Vorteil und erhöht die Sicherheit vor dem Abscheren des Haltebands 83 vom Airbagdeckel 17 bei einer Airbagauslösung.

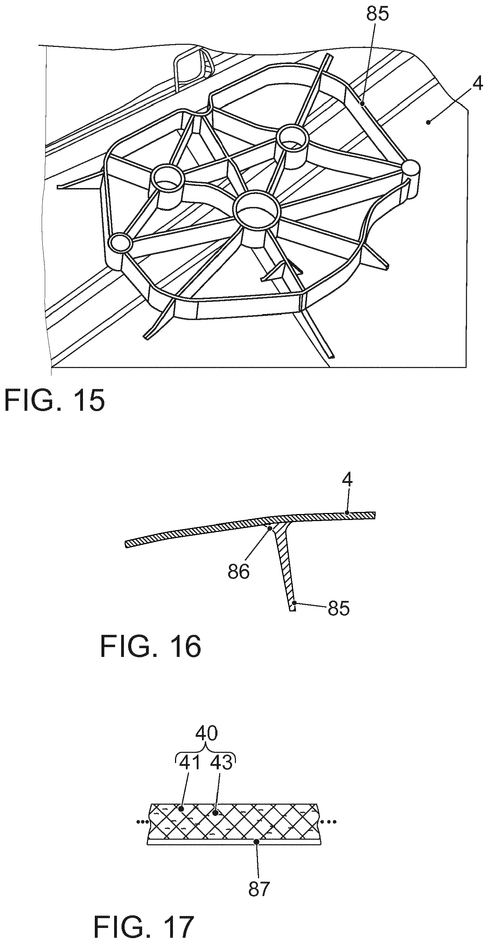

In der Figur 15 ist beispielhaft eine an der Unterseite des Instrumententafel-Trägers 3 im Kunststoffspritzgieß-Schritt angeformte weitere Verstärkungsstruktur 85 gezeigt. Die Verstärkungsstruktur 85 ist in etwa im Instrumententafel-Mittelbereich zwischen der Hutze 5 und dem Airbaghalterahmen (in der Fahrzeugquerrichtung y betrachtet) angeordnet.

Wie aus der Figur 15 hervorgeht, besteht die Verstärkungsstruktur 85 aus fachwerkartig verlaufenden Versteifungsrippen. Diese können lastpfadgerecht sowie spritzgussgerecht an dem Naturfaser-Grundkörper 4 angespritzt sein, wodurch eine stoffschlüssige Verbindung zwischen der PP-Matrix des Faserhalbzeugs 40 und dem Kunststoffmaterial der Verstärkungsstruktur 85 erfolgt. Zusätzlich kommt es an den Übergängen zu formschlüssigen Verkeilungen. Dieser Effekt wird durch eine Phase 86 (bzw. einen Radius) oder großzügige Verrundung am Übergang von der Rippe zum Naturfaserbauteil erhöht. Dies resultiert in einer deutlich belastbareren Verbindung zwischen der Rippe und dem Naturfaserbauteil, wie es in der Figur 16 angedeutet ist.

In den vorangegangenen Figuren 3a bis 3c sind die Prozessschritte zur Herstellung des Instrumententafel-Trägers 3 veranschaulicht. Speziell im Prozessschritt der Figur 3a kann auf der, der späteren Sichtseite abgewandten Seite des Faserhalbzeugs 40 zusätzlich eine als Geruchssperre wirkende Folie 87 aufgebracht werden, wie es in der Figur 17 angedeutet ist. Die Figur 17 ist abgesehen von der zusätzlichen Folie 87 identisch mit der Figur 3a. Mit Hilfe der als Geruchssperre wirkende Folie 87 ist eine materialbedingte Geruchsbildung des naturfaserverstärkten Instrumententafel-Trägers 3 sowohl auf seiner Sichtseite (durch die Kaschierung 9, 11) als auch auf der gegenüberliegenden Seite (durch die Folie 87) unterbunden.

Im weiteren Herstellungsverlauf können jedoch durch Schneid- und/oder Stanz-Prozessschritte Kantenflächen des Instrumententafel-Trägers 4 freigelegt werden. Um im Bereich dieser Kantenflächen eine möglichst reduzierte Geruchsbildung zu gewährleisten, ist das Naturfaservlies (Faserhalbzeug 40) im Schnittkantenbereich bewusst höher verpresst, wodurch der Querschnitt im umlaufenden Stanzbereich reduziert ist. Die potentiell geruchsbildenden Kantenquerschnitte sind somit reduziert, so dass auch die Gefahr eine Geruchsbildung reduziert ist.

Darüber hinaus kann bei einem PU-Schäumprozess zur Bildung der PU-Schaumschicht 11 der sichtseitigen Instrumententafel-Kaschierung es in Verbindung mit einem stark umgeformten Naturfaserbauteil (das heißt Instrumententafel-Grundkörper 4) es in den Umformbereichen zum starken Verzug des erwärmten Naturfaservlieses und somit örtlich zu unterschiedlichen Material-Dichten kommen. Mit einer variablen Verpressung kann die Material-Dichte möglichst gleichmäßig über das Bauteil eingebracht werden und somit ein Durchgang von PU-Schaum von der Kaschierseite zur Nicht-Kaschierseite beeinflusst werden. Auf diese Weise kann die Durchlässigkeit der Naturfaserbauteile optimiert werden.

### Bezugszeichenliste

- 1: Instrumententafel
- 3: Instrumententafel-Träger
- 4: Instrumententafel-Grundkörper
- 5: Hutze
- 7: Airbaghalterahmen
- 9: Slush-Haut
- 11: PU-Schaumschicht
- 13: Grundkörper-Ausnehmung
- 15: Anspritzprofil
- 17: Spritzmasse-Deckwand
- 19: Instrumententafel-Grundfläche
- 21: Stützschenkel
- 23: Stufenwand
- 25: innere Randkante
- 27: vertikale Anlagewand
- 29: Fließöffnungen
- 31: Übergangskante
- 33: Wandabschnitt
- 35: Spritzmasse-Seitenwand
- 37: Spritzmasse-Kopf
- 39: Spritzmasse-Stege
- 40: Faserhalbzeug
- 41: Naturfasern
- 43: Thermoplastfasern
- 45: Kunststoffmatrix
- 47: Schusskanal
- 53: Rippen
- 57: Spritzgießwerkzeug
- 59: obere Werkzeughälfte
- 61: untere Werkzeughälfte
- 63, 65: Formflächen
- 67: Werkzeugkavität
- 69, 71: Positionierstifte
- 73: Teilkavität
- 75: Vertiefungen
- 79: Airbagmodul
- 81: Gewindebuchsen
- 82: Verstärkungsstruktur
- 83: Halteband
- 85: Verstärkungsstruktur
- 86: Phase
- 87: geruchsreduzierende Folie
- e: Eindrücktiefe

## Patentansprüche

1. Verfahren zur Herstellung einer Instrumententafel (1) für ein Kraftfahrzeug mit zumindest einem Funktionselement (5, 7), wobei die Instrumententafel (1) einen Instrumententafel-Träger (3) aufweist, in welchem Verfahren ein Faserhalbzeug (40) aus Naturfasern (41) und Thermoplastfasern (43) in einem Heizschritt bis über die Schmelztemperatur der Thermoplastfasern (43) erwärmt wird, und zwar unter Bildung einer aufgeschmolzenen Kunststoffmatrix (45), in der die Naturfasern (41) eingebettet sind, und anschließend in einem Formpressschritt das Faserhalbzeug (40) mit der aufgeschmolzenen Kunststoffmatrix (45) zu dem Instrumententafel-Träger (3) umgeformt wird, wobei zur Bildung des Instrumententafel-Trägers (3) das Funktionselement (5, 7) in einem Kunststoff-Spritzgießschritt unmittelbar an einem, im Formpressschritt hergestellten Instrumententafel-Grundkörper (4) angespritzt wird, und wobei der Instrumententafel-Grundkörper (4) mit zumindest einer Grundkörper-Ausnehmung (13) versehen wird, an deren Öffnungsrandbereich ein Anspritzprofil (15) ausgebildet ist, an dem das Funktionselement (5, 7) angespritzt wird, wobei das Anspritzprofil (15) mit einem vom Instrumententafel-Grundkörper (4) um einen Höhenversatz abgestuften Stützschenkel (21) versehen wird, auf dem das Funktionselement (5, 7) mit einem Randsteg (22) abgestützt wird, wobei der Stützschenkel (21) entlang des Öffnungsrandes der Grundkörper-Ausnehmung (13) durchgängig verläuft, **dadurch gekennzeichnet, dass** der Stützschenkel (21) an seiner inneren Randkante (25) mit einer vertikalen Anlagewand (27) verlängert wird, die Bestandteil des Anspritzprofils (15) ist, dass von der Unterseite der Funktionselement-Deckwand (17) eine Seitenwand (35) abragt, dass vor dem Kunststoff-Spritzgießschritt ein Bearbeitungsschritt erfolgt, in dem das Anspritzprofil (15) mit einer Mehrzahl von Fließöffnungen (29) versehen wird, durch die im Spritzgießschritt die flüssige Kunststoff-Spritzmasse strömt, und zwar unter Bildung eines ausgeweiteten Kunststoffkopfes (37) auf der, der Seitenwand (35) gegenüberliegenden Seite der Anspritzprofil-Anlagewand (27), dass entlang des Öffnungsrandbereiches der Grundkörper-Ausnehmung (13) eine Mehrzahl von Fließöffnungen (29) mit dazugehörigen Kunststoffköpfen (37) vorgesehen werden, und dass die Kunststoffköpfe (37) über angespritzte Kunststoffstege (39) miteinander verbunden werden.

2. Verfahren nach Anspruch 1, **dadurch gekennzeichnet, dass** der Formpressschritt in einer Formpresse erfolgt, in deren Kavität das Faserhalbzeug (40) mit aufgeschmolzener Kunststoffmatrix (45) eingelegt wird, und anschließend die Formpresse-Kavität unter Umformung des Faserhalbzeugs (40) zum Instrumententafel-Grundkörper (4) umgeformt wird.

3. Verfahren nach Anspruch 2, **dadurch gekennzeichnet, dass** der Spritzgießschritt ebenfalls in der Formpresse durchgeführt wird, und zwar während oder nach dem Formpressschritt, und dass die Formpresswerkzeuge als Hybridwerkzeuge ausgeführt sind, die es ermöglichen, während oder nach dem Formpressschritt das Funktionselement (5, 7) anzuspritzen.

4. Verfahren nach einem der vorhergehenden Ansprüche, **dadurch gekennzeichnet, dass** das Funktionselement (5, 7) mit einer Deckwand (17) versehen wird, die die Grundkörper-Ausnehmung (13) des Instrumententafel-Grundkörpers (4) überdeckt.

5. Verfahren nach einem der vorhergehenden Ansprüche, **dadurch gekennzeichnet, dass** der Höhenversatz identisch mit der Materialdicke des Randstegs (22) ist.

6. Verfahren nach Anspruch 5, **dadurch gekennzeichnet, dass** der abgestufte Stützschenkel (21) an einer vertikalen Stufenwand (23) in eine Instrumententafel-Grundfläche (19) übergeht, und dass der Stützschenkel (21) mit einer inneren Randkante (25) die Grundkörper-Ausnehmung (13) begrenzt, und/oder dass der Stützschenkel (21) koplanar zur Instrumententafel-Grundfläche (19) ist.

7. Verfahren nach Anspruch 6, **dadurch gekennzeichnet, dass** die Seitenwand (35) unter Bildung einer Doppelwandstruktur an die Anspritzprofil-Anlagewand (27) angespritzt wird.

8. Verfahren nach einem der vorhergehenden Ansprüche, **dadurch gekennzeichnet, dass** die Anspritzprofil-Anlagewand (27) des Instrumententafel-Grundkörpers (4) an einer Übergangskante (31) mit einem Wandabschnitt (33) verlängert wird, und dass der Wandabschnitt (33) zusammen mit der Anlagewand (27) und dem Stützschenkel (21) im Querschnitt ein U-Profil bilden, das entgegen der Grundkörper-Ausnehmung (13) seitlich nach außen offen ist, und dass die Spritzmasse-Seitenwand (35) unter Bildung der Doppelwandstruktur bis an den verlängerten Wandabschnitt (33) angespritzt wird, und dass die Spritzmasse-Seitenwand (35) zusammen mit den Spritzmasse-Randsteg (22) oder der Spritzmasse-Deckwand (17) das U-förmige Anspritzprofil (15) außenseitig C-förmig umgreift.

9. Verfahren nach einem der vorhergehenden Ansprüche, **dadurch gekennzeichnet, dass** das Funktionselement (5, 7) zwischen seinem Spritzmasse-Randsteg (22) und seiner Spritzmasse-Seitenwand (35), die einen Airbag-Schusskanal (47) begrenzt, einen Inneneckbereich aufspannt, in dem umfangsseitig voneinander beabstandete Rippen (53) angeformt sind, und dass der Anspritzprofil-Stützschenkel (21) Schlitze (55) aufweist, durch die die Rippen (53) bis zum Randsteg (22) des Funktionselements (5, 7) geführt sind.

10. Verfahren nach einem der vorhergehenden Ansprüche, **dadurch gekennzeichnet, dass** das zumindest eine Funktionselement (5, 7) eine fahrerseitige Hutze (5) und/oder ein beifahrerseitiger Airbaghalterahmen (7) ist.

11. Verfahren nach einem der vorhergehenden Ansprüche, **dadurch gekennzeichnet, dass** der Kunststoff-Spritzgießschritt in einem von der Formpresse separaten Spritzgießwerkzeug (57) erfolgt, und dass zur Vorbereitung des Kunststoff-Spritzgießschrittes der in der Formpresse geformte Instrumententafel-Grundkörper (4) als Einlegerteil in die Werkzeugkavität (67) des Spritzgießwerkzeugs (57) eingelegt wird und anschließend die Werkzeugkavität (67) geschlossen wird, und zwar unter Freilassung einer die Negativform des Funktionselements (5, 7) nachbildenden Teilkavität (73), und dass im Kunststoff-Spritzgießschritt die flüssige Kunststoff-Spritzmasse unter Druck und Wärme in die Teilkavität (73) eingespritzt wird und anschließend ausgehärtet wird.

12. Verfahren nach Anspruch 11, **dadurch gekennzeichnet, dass** das Spritzgießwerkzeug (57) aus zumindest zwei Werkzeugteilen (59, 61) besteht, deren Formflächen (63, 65) die Werkzeugkavität (67) definieren, und dass zumindest an einer der Formflächen (63) zumindest ein Positionierstift (69, 71) ausgebildet ist, der bei geschlossener Werkzeugkavität (67) den Instrumententafel-Grundkörper (4) gegen eine gegenüberliegende Formfläche (65) anpresst.

13. Verfahren nach Anspruch 12, **dadurch gekennzeichnet, dass** der Positionierstift (69) die, vor dem Spritzgießschritt noch freie Teilkavität (73) durchragt und in Druckanlage mit dem Stützschenkel (21) des Instrumententafel-Grundkörpers (4) ist, und zwar nahe der die Grundkörper-Ausnehmung (13) begrenzenden inneren Randkante (25), damit die flüssige Kunststoffschmelze durch den hohen Einspritzdruck keine Möglichkeiten erhält, den Instrumententafel-Grundkörper (4) in eine undefinierte Lage zu verschieben.

14. Verfahren nach Anspruch 12 oder 13, **dadurch gekennzeichnet, dass** der Positionierstift (71) außerhalb der Teilkavität (73) angeordnet ist, und zwar in einem von der inneren Randkante (25) entfernten Bereich, damit Aufwölbungen des Instrumententafel-Grundkörpers (4) vermieden werden.

15. Verfahren nach Anspruch 12, 13 oder 14, **dadurch gekennzeichnet, dass** der Positionierstift (69) zwischen den Schlitzen (55), durch die die Rippen (53) des Funktionsteils (5, 7) geführt werden, gegen den Instrumententafel-Grundkörper (4) drückt.

16. Verfahren nach einem der Ansprüche 12 bis 15, **dadurch gekennzeichnet, dass** der Positionierstift (69, 71) mit einer Eindrücktiefe (e) im Zehntel-Millimeterbereich in den Instrumententafel-Grundkörper (4) eingedrückt wird.

17. Verfahren nach einem der vorhergehenden Ansprüche, **dadurch gekennzeichnet, dass** nach erfolgtem Kunststoff-Spritzgießschritt der Instrumententafel-Träger (3) mit einer Kaschierung versehen wird, und dass die Kaschierung eine dem Fahrzeug-Innenraum zugewandte Slush-Haut (9) sowie eine zwischen der Slush-Haut (9) und der Oberseite des Instrumententafel-Trägers (3) angeordnete Schaumschicht (11) aufweist.

18. Verfahren nach einem der Ansprüche 12 bis 17, **dadurch gekennzeichnet, dass** der Positionierstift (69, 71) einen Durchmesser zwischen 0,5 mm und 10 mm aufweist, damit sich keine Abzeichnungen auf der Sichtseite der Instrumententafel bilden.

19. Verfahren nach einem der Ansprüche 12 bis 18, **dadurch gekennzeichnet, dass** der Positionierstift (69, 71) eine Konizität von 0,5° bis 20° aufweist, um eine leichtgängige Entformung zu gewährleisten.

20. Verfahren nach einem der Ansprüche 12 bis 19, **dadurch gekennzeichnet, dass** der Positionierstift (69, 71) starr an der Formfläche (63) des Werkzeugteils (59) des Spritzgießwerkzeugs (57) ausgebildet ist, oder dass der Positionierstift (69) mit Bezug auf die Formfläche (63) des Werkzeugteils (59) verstellbar ist, und dass der verstellbare Positionierstift (69) durch Aufbau einer Druckkraft beim Füllen der Werkzeugkavität (67) zurück in das Werkzeugteil (59) gedrückt wird.

21. Verfahren nach einem der vorhergehenden Ansprüche, **dadurch gekennzeichnet, dass** das im Kunststoff-Spritzgießschritt am Instrumententafel-Grundkörper (4) angespritzte Funktionselement (7) ein Airbaghalterahmen ist, an dem ein Airbagmodul (79) gehaltert ist, und dass im Kunststoff-Spritzgießschritt Gewindebolzen (81) im Kunststoffmaterial des Airbaghalterahmens (7) eingebettet werden, und dass das Airbagmodul (79) an den Gewindebuchsen (81) festschraubbar ist.

22. Verfahren nach Anspruch 21, **dadurch gekennzeichnet, dass** die Funktionselement-Deckwand (17) ein, einen Airbag-Schusskanal verschließender Airbagdeckel ist und die Spritzmasse-Seitenwand (35) eine den Airbag-Schusskanal begrenzende Schusskanalwand ist, und dass im Kunststoff-Spritzgießschritt ein Halteband (83) sowohl am Airbagdeckel (17) als auch an der Schusskanalwand (35) angegossen wird, wobei das Halteband (83) in einem Inneneckbereich zwischen dem Airbagdeckel (17) und der Schusskanalwand (35) eine freie Schlaufe aufweist, die bei aktiviertem Airbag ein Scharnier bildet, um das sich der öffnende Airbagdeckel (17) schwenkt.

23. Verfahren nach einem der vorhergehenden Ansprüche, **dadurch gekennzeichnet, dass** die Funktionselement-Deckwand (17) an ihrer Unterseite mit einer fachwerkartigen oder wabenförmigen Verstärkungsstruktur (77) ausgebildet wird, und dass die Verstärkungsstruktur (77) im Kunststoff-Spritzgießschritt materialeinheitlich und einstückig an der Funktionselement-Deckwand (17) angeformt wird.

24. Instrumententafel, die mit einem Verfahren nach einem der vorhergehenden Ansprüche hergestellt ist.

## Claims

1. Method for producing a dashboard (1) for a motor vehicle comprising at least one functional element (5, 7), wherein the dashboard (1) has a dashboard support (3), in which method a prepreg (40) of natural fibres (41) and thermoplastic fibres (43) is heated in a heating step to above the melting temperature of the thermoplastic fibres (43), specifically to form a molten polymer matrix (45), in which the natural fibres (41) are embedded, and subsequently the prepreg (40) with the molten polymer matrix (45) is shaped in a compression-moulding step into the dashboard support (3), wherein, to form the dashboard support (3), in a plastics injection-moulding step the functional element (5, 7) is moulded directly onto a main dashboard body (4) produced in the compression-moulding step, and wherein the main dashboard body (4) is provided with at least one main-body clearance (13), at the peripheral region around the opening of which there is formed a moulding profile (15), at which the functional element (5, 7) is moulded on, wherein the moulding profile (15) is provided with a supporting leg (21), which is stepped-down by a vertical offset from the main dashboard body (4) and on which the functional element (5, 7) is supported by a peripheral web (22), wherein the supporting leg (21) runs right along the periphery around the opening of the main-body clearance (13), **characterized in that** the supporting leg (21) is extended at its inner peripheral edge (25) by a vertical abutting wall (27), which is a component part of the moulding profile (15), **in that** a side wall (35) protrudes from the underside of the functional-element top wall (17), **in that** the plastics injection-moulding step is preceded by a processing step in which the moulding profile (15) is provided with a plurality of flow openings (29), through which the liquid plastics moulding compound flows in the injection-moulding step, specifically to form a widened plastic head (37) on the side of the moulding-profile abutting wall (27) that is opposite from the side wall (35), **in that** a plurality of flow openings (29) with associated plastic heads (37) are provided along the peripheral region around the opening of the main-body clearance (13), and **in that** the plastic heads (37) are connected to one another by way of moulded-on plastic webs (39).

2. Method according to Claim 1, **characterized in that** the compression-moulding step takes place in a moulding press, in the cavity of which the prepreg (40) with the molten polymer matrix (45) is placed, and subsequently the cavity of the moulding press is changed in shape to shape the prepreg (40) into the main dashboard body (4).

3. Method according to Claim 2, **characterized in that** the injection-moulding step is likewise carried out in the moulding press, specifically during or after the compression-moulding step, and **in that** the compression-moulding tools are designed as hybrid tools, which make it possible to mould on the functional element (5, 7) during or after the compression-moulding step.

4. Method according to one of the preceding claims, **characterized in that** the functional element (5, 7) is provided with a top wall (17), which covers the main-body clearance (13) of the main dashboard body (4) .

5. Method according to one of the preceding claims, **characterized in that** the vertical offset is identical to the material thickness of the peripheral web (22).

6. Method according to Claim 5, **characterized in that** the stepped-down supporting leg (21) goes over at a vertical step wall (23) into a main dashboard area (19), and **in that** the supporting leg (21) delimits the main-body clearance (13) with an inner peripheral edge (25), and/or **in that** the supporting leg (21) is coplanar with the main dashboard area (19).

7. Method according to Claim 6, **characterized in that** the side wall (35) is moulded onto the moulding-profile abutting wall (27) to form a double-wall structure.

8. Method according to one of the preceding claims, **characterized in that** the moulding-profile abutting wall (27) of the main dashboard body (4) is extended at a transitional edge (31) by a wall portion (33), and **in that** in cross section the wall portion (33) together with the abutting wall (27) and the supporting leg (21) form a U profile, which is open laterally outwards away from the main-body clearance (13), and **in that** the moulding-compound side wall (35) is moulded on up to the extended wall portion (33) to form the double-wall structure, and **in that** the moulding-compound side wall (35) reaches in a C-shaped manner around the outside of the U-shaped moulding profile (15), together with the injection-moulding peripheral web (22) or the injection-moulding top wall (17).

9. Method according to one of the preceding claims, **characterized in that**, between its moulding-compound peripheral web (22) and its moulding-compound side wall (35), which delimits an airbag deployment chute (47), the functional element (5, 7) defines an inner corner region in which ribs (53) that are circumferentially spaced apart from one another are moulded on, and **in that** the moulding-profile supporting leg (21) has slits (55), through which the ribs (53) are led up to the peripheral web (22) of the functional element (5, 7).

10. Method according to one of the preceding claims, **characterized in that** the at least one functional element (5, 7) is a driver-side cowl (5) and/or a passenger-side airbag retaining frame (7).

11. Method according to one of the preceding claims, **characterized in that** the plastics injection-moulding step takes place in an injection-moulding tool (57) separate from the moulding press, and **in that**, to prepare for the plastics injection-moulding step, the main dashboard body (4) moulded in the moulding press is placed as an insert into the tool cavity (67) of the injection-moulding tool (57) and subsequently the tool cavity (67) is closed, specifically while leaving a part-cavity (73) that replicates the negative form of the functional element (5, 7) exposed, and **in that**, in the plastics injection-moulding step, the liquid plastics moulding compound is injected under pressure and heat into the part-cavity (73) and is subsequently cured.

12. Method according to Claim 11, **characterized in that** the injection-moulding tool (57) consists of at least two tool parts (59, 61), the moulding areas (63, 65) of which define the tool cavity (67), and **in that** at least on one of the moulding areas (63) there is formed at least one positioning pin (69, 71), which presses the main dashboard body (4) against an opposite moulding area (65) when the mould cavity (67) is closed.

13. Method according to Claim 12, **characterized in that** the positioning pin (69) extends through the part-cavity (73), still free before the injection-moulding step, and presses against the supporting leg (21) of the main dashboard body (4), specifically near the inner peripheral edge (25) delimiting the main-body clearance (13), in order that the high injection pressure does not make it possible for the liquid molten plastic to displace the main dashboard body (4) into an undefined position.

14. Method according to Claim 12 or 13, **characterized in that** the positioning pin (71) is arranged outside the part-cavity (73), specifically in a region away from the inner peripheral edge (25), in order that upward distortions of the main dashboard body (4) are avoided.

15. Method according to Claim 12, 13 or 14, **characterized in that** the positioning pin (69) is pressed against the main dashboard body (4) between the slits (55) through which the ribs (53) of the functional part (5, 7) are led.

16. Method according to one of Claims 12 to 15, **characterized in that** the positioning pin (69, 71) is pressed into the main dashboard body (4) with a pressing-in depth (e) in the range of tenths of a millimetre.

17. Method according to one of the preceding claims, **characterized in that**, after the plastics injection-moulding step has taken place, the dashboard support (3) is provided with a laminate, and **in that** the laminate has a slush skin (9), facing the passenger compartment, and a foam layer (11), arranged between the slush skin (9) and the upper side of the dashboard support (3).

18. Method according to one of Claims 12 to 17, **characterized in that** the positioning pin (69, 71) has a diameter of between 0.5 mm and 10 mm, in order that no impressions are left on the visible side of the dashboard.

19. Method according to one of Claims 12 to 18, **characterized in that** the positioning pin (69, 71) has a conicity of 0.5° to 20°, in order to ensure easy demoulding.

20. Method according to one of Claims 12 to 19, **characterized in that** the positioning pin (69, 71) is formed rigidly on the moulding area (63) of the tool part (59) of the injection-moulding tool (57), or **in that** the positioning pin (69) is adjustable with respect to the moulding area (63) of the tool part (59), and **in that** the adjustable positioning pin (69) is pressed back into the tool part (59) by the build-up of a compressive force during the filling of the tool cavity (67).

21. Method according to one of the preceding claims, **characterized in that** the functional element (7), moulded onto the main dashboard body (4) in the plastics injection-moulding step, is an airbag retaining frame, in which an airbag module (79) is mounted, and **in that**, in the plastics injection-moulding step, threaded bolts (81) are embedded in the plastics material of the airbag retaining frame (7), and **in that** the airbag module (79) can be securely screwed onto the threaded bushes (81).

22. Method according to Claim 21, **characterized in that** the functional-element top wall (17) is an airbag cover closing an airbag deployment chute, and the moulding-compound side wall (35) is a deployment-chute wall delimiting the airbag deployment chute, and **in that**, in the plastics injection-moulding step, a retaining band (83) is moulded both onto the airbag cover (17) and onto the deployment chute wall (35), wherein the retaining band (83) has in an inner corner region between the airbag cover (17) and the deployment chute wall (35) a free loop which, when the airbag is activated, forms a hinge about which the opening airbag cover (17) pivots.

23. Method according to one of the preceding claims, **characterized in that** the functional-element top wall (17) is formed on its underside with a truss-like or honeycomb-shaped reinforcing structure (77), and **in that** the reinforcing structure (77) is moulded onto the functional-element top wall (17) in the plastics injection-moulding step from a single material and in one piece.

24. Dashboard produced by a method according to one of the preceding claims.

## Revendications

1. Procédé de fabrication d'un tableau de bord (1) pour un véhicule automobile, comportant au moins un élément fonctionnel (5, 7), dans lequel le tableau de bord (1) comprend un support de tableau de bord (3), procédé dans lequel un produit semi-fini (40) en fibres naturelles (41) et fibres thermoplastiques (43) est, pendant une étape de chauffage, chauffé au-delà de la température de fusion des fibres thermoplastiques (43), et ce en formant une matrice en matière synthétique fondue (45) dans laquelle les fibres naturelles (41) sont noyées, et ensuite, pendant une étape de moulage par compression, le produit semi-fini en fibres (40) doté de la matrice en matière synthétique fondue (45) est déformé pour produire le support de tableau de bord (3), dans lequel, pour la formation du support de tableau de bord (3), l'élément fonctionnel (5, 7) est, pendant une étape de moulage par injection de matière synthétique, moulé par injection directement sur un corps de base de tableau de bord (4) fabriqué à l'étape de moulage par compression, et dans lequel le corps de base de tableau de bord (4) est doté d'au moins un évidement de corps de base (13) au niveau de la région de bord d'ouverture duquel est formé un profilé de moulage par injection (15), sur lequel l'élément fonctionnel (5, 7) est moulé par injection, dans lequel le profilé de moulage par injection (15) est doté d'une branche de support (21) étagée suivant un décalage en hauteur par rapport au corps de base de tableau de bord (4), branche de support sur laquelle l'élément fonctionnel (5, 7) est supporté par une nervure de bord (22), dans lequel la branche de support (21) s'étend de manière continue le long du bord d'ouverture de l'évidement de corps de base (13), **caractérisé en ce que** la branche de support (21) est, au niveau de son arête de bord intérieure (25), prolongée par une paroi d'appui verticale (27) qui fait partie du profilé de moulage par injection (15), **en ce qu'**une paroi latérale (35) fait saillie à partir du côté inférieur de la paroi supérieure d'élément fonctionnel (17), **en ce qu'**une étape d'usinage a lieu avant l'étape de moulage par injection de matière synthétique, étape d'usinage pendant laquelle le profilé de moulage par injection (15) est pourvu d'une pluralité d'ouvertures d'écoulement (29) à travers lesquelles la masse injectée de matière synthétique liquide s'écoule pendant l'étape de moulage par injection, et ce en formant une tête en matière synthétique élargie (37) sur le côté de la paroi d'appui de profilé de moulage par injection (27) en regard de la paroi latérale (35), **en ce qu'**une pluralité d'ouvertures d'écoulement (29) dotées de têtes en matière synthétique (37) associées sont prévues le long de la région de bord d'ouverture de l'évidement de corps de base (13), et **en ce que** les têtes en matière synthétique (37) sont reliées les unes aux autres par le biais de nervures en matière synthétique (39) moulées par injection.

2. Procédé selon la revendication 1, **caractérisé en ce que** l'étape de moulage par compression a lieu dans une presse à mouler dans la cavité de laquelle le produit semi-fini en fibres (40) doté de la matrice en matière synthétique fondue (45) est inséré, et ensuite la cavité de presse à mouler est déformée en déformant le produit semi-fini en fibres (40) pour produire le corps de base de tableau de bord (4).

3. Procédé selon la revendication 2, **caractérisé en ce que** l'étape de moulage par injection est effectuée également dans la presse à mouler, et ce pendant et/ou après l'étape de moulage par compression, et **en ce que** les outils de moulage par compression sont réalisés sous forme d'outils hybrides qui permettent de mouler l'élément fonctionnel (5, 7) par injection pendant ou après l'étape de moulage par compression.

4. Procédé selon l'une des revendications précédentes, **caractérisé en ce que** l'élément fonctionnel (5, 7) est doté d'une paroi supérieure (17) qui recouvre l'évidement (13) du corps de base de tableau de bord (4).

5. Procédé selon l'une des revendications précédentes, **caractérisé en ce que** le décalage en hauteur est identique à l'épaisseur de matériau de la nervure de bord (22) .

6. Procédé selon la revendication 5, **caractérisé en ce que** la branche de support étagée (21) se prolonge par une surface de base de tableau de bord (19) au niveau d'une paroi d'étage verticale (23), et **en ce que** la branche de support (21) limite par une arête de bord intérieure (25) l'évidement de corps de base (13), et/ou **en ce que** la branche de support (21) est coplanaire à la surface de base de tableau de bord (19).

7. Procédé selon la revendication 6, **caractérisé en ce que** la paroi latérale (35) est moulée par injection sur la paroi d'appui de profilé de moulage par injection (27) en formant une structure à paroi double.

8. Procédé selon l'une des revendications précédentes, **caractérisé en ce que** la paroi d'appui de profilé de moulage par injection (27) du corps de base de tableau de bord (4) est prolongée par une partie de paroi (33) au niveau d'une arête de transition (31), et **en ce que** la partie de paroi (33) forme, conjointement avec la paroi d'appui (27) et la branche de support (21), un profilé en U en section transversale, lequel est ouvert latéralement vers l'extérieur en sens inverse de l'évidement de corps de base (13), et **en ce que** la paroi latérale en masse injectée (35) est moulée par injection jusqu'à la partie de paroi prolongée (33) en formant la structure à paroi double, et **en ce que** la paroi latérale en masse injectée (35), conjointement avec la nervure de bord en masse injectée (22) ou la paroi supérieure en masse injectée (17), enveloppe en forme de C du côté extérieur le profilé de moulage par injection (15) en forme de U.

9. Procédé selon l'une des revendications précédentes, **caractérisé en ce que** l'élément fonctionnel (5, 7) définit une région de coin intérieure entre sa nervure de bord en masse injectée (22) et sa paroi latérale en masse injectée (35) qui délimite un canal d'éjection d'airbag (47), région de coin intérieure dans laquelle sont moulées des ailettes (53) espacées les unes des autres du côté périphérique, et **en ce que** la branche de support de profilé de moulage par injection (21) comprend des fentes (55) à travers lesquelles les ailettes (53) sont guidées jusqu'à la nervure de bord (22) de l'élément fonctionnel (5, 7).

10. Procédé selon l'une des revendications précédentes, **caractérisé en ce que** l'au moins un élément fonctionnel (5, 7) est une coiffe (5) côté conducteur et/ou un cadre de retenue d'airbag (7) côté passager avant.

11. Procédé selon l'une des revendications précédentes, **caractérisé en ce que** l'étape de moulage par injection de matière synthétique a lieu dans un outil de moulage par injection (57) distinct de la presse à mouler, et **en ce que**, pour la préparation de l'étape de moulage par injection de matière synthétique, le corps de base de tableau de bord (4) moulé dans la presse à mouler est inséré comme pièce à insérer dans la cavité d'outil (67) de l'outil de moulage par injection (57) et ensuite la cavité d'outil (67) est fermée, et ce en laissant libre une cavité partielle (73) reproduisant la forme négative de l'élément fonctionnel (5, 7), et **en ce que** la masse injectée de matière synthétique liquide est injectée sous pression et sous l'effet de la chaleur dans la cavité partielle (73) lors de l'étape de moulage par injection de matière synthétique et est ensuite durcie.

12. Procédé selon la revendication 11, **caractérisé en ce que** l'outil de moulage par injection (57) est constitué d'au moins deux parties d'outil (59, 61) dont les surfaces de moulage (63, 65) définissent la cavité d'outil (67), et **en ce qu'**au moins une goupille de positionnement (69, 71) est réalisée au moins sur l'une des surfaces de moulage (63), laquelle goupille presse le corps de base de tableau de bord (4) contre une surface de moulage (65) en regard lorsque la cavité d'outil (67) est fermée.

13. Procédé selon la revendication 12, **caractérisé en ce que** la goupille de positionnement (69) traverse la cavité partielle (73) encore libre avant l'étape de moulage par injection et est en appui par pression avec la branche de support (21) du corps de base de tableau de bord (4), et ce près de l'arête de bord intérieure (25) délimitant l'évidement de corps de base (13), afin que la matière synthétique fondue liquide soit dans l'impossibilité de déplacer le corps de base de tableau de bord (4) dans une position non définie sous l'effet de la pression d'injection élevée.

14. Procédé selon la revendication 12 ou 13, **caractérisé en ce que** la goupille de positionnement (71) est disposée à l'extérieur de la cavité partielle (73), et ce dans une région éloignée de l'arête de bord intérieure (25), afin d'empêcher des bombements du corps de base de tableau de bord (4).

15. Procédé selon la revendication 12, 13 ou 14, **caractérisé en ce que** la goupille de positionnement (69) presse contre le corps de base de tableau de bord (4) entre les fentes (55) à travers lesquelles les ailettes (53) de la partie fonctionnelle (5, 7) sont guidées.

16. Procédé selon l'une des revendications 12 à 15, **caractérisé en ce que** la goupille de positionnement (69, 71) est enfoncée dans le corps de base de tableau de bord (4) à une profondeur d'enfoncement (e) de l'ordre du dixième de millimètre.

17. Procédé selon l'une des revendications précédentes, **caractérisé en ce qu'**une fois l'étape de moulage par injection de matière synthétique effectuée, le support de tableau de bord (3) est doté d'une stratification, et **en ce que** la stratification comprend une peau moulée par embouage (9) tournée vers l'espace intérieur du véhicule ainsi qu'une couche de mousse (11) disposée entre la peau moulée par embouage (9) et le côté supérieur du support de tableau de bord (3).

18. Procédé selon l'une des revendications 12 à 17, **caractérisé en ce que** la goupille de positionnement (69, 71) présente un diamètre compris entre 0,5 mm et 10 mm, afin qu'aucuns bosselages ne se forment sur le côté visible du tableau de bord.

19. Procédé selon l'une des revendications 12 à 18, **caractérisé en ce que** la goupille de positionnement (69, 71) présente une conicité de 0,5° à 20°, afin de garantir un démoulage facile.

20. Procédé selon l'une des revendications 12 à 19, **caractérisé en ce que** la goupille de positionnement (69, 71) est réalisée de manière rigide sur la surface de moulage (63) de la partie d'outil (59) de l'outil de moulage par injection (57), ou **en ce que** la goupille de positionnement (69) est déplaçable par rapport à la surface de moulage (63) de la partie d'outil (59), et **en ce que** la goupille de positionnement déplaçable (69) est pressée de manière à revenir dans la partie d'outil (59) par établissement d'une force de pression lors du remplissage de la cavité d'outil (67).

21. Procédé selon l'une des revendications précédentes, **caractérisé en ce que** l'élément fonctionnel (7) moulé par injection sur le corps de base de tableau de bord (4) pendant l'étape de moulage par injection de matière synthétique est un cadre de retenue d'airbag sur lequel un module d'airbag (79) est retenu, et **en ce qu'**à l'étape de moulage par injection de matière synthétique, des boulons filetés (81) sont noyés dans la matière synthétique du cadre de retenue d'airbag (7), et **en ce que** le module d'airbag (79) peut être serré à bloc sur les douilles filetées (81).

22. Procédé selon la revendication 21, **caractérisé en ce que** la paroi supérieure d'élément fonctionnel (17) est un couvercle d'airbag fermant un canal d'éjection d'airbag et la paroi latérale en masse injectée (35) est une paroi de canal d'éjection limitant le canal d'éjection d'airbag, et **en ce qu'**à l'étape de moulage par injection de matière synthétique, une bande de retenue (83) est coulée à la fois avec le couvercle d'airbag (17) et avec la paroi de canal d'éjection (35), la bande de retenue (83) comprenant une boucle libre dans une région de coin intérieure entre le couvercle d'airbag (17) et la paroi de canal d'éjection (35), laquelle boucle forme une charnière lorsque l'airbag est activé, autour de laquelle le couvercle d'airbag s'ouvrant (17) pivote.

23. Procédé selon l'une des revendications précédentes, **caractérisé en ce que** la paroi supérieure d'élément fonctionnel (17) est réalisée, au niveau de son côté inférieur, de manière à présenter une structure de renforcement (77) de type treillis ou en nid d'abeilles, et **en ce que** la structure de renforcement (77) est, pendant l'étape de moulage par injection de matière synthétique, moulée de manière venue de matière et d'un seul tenant sur la paroi supérieure d'élément fonctionnel (17) .

24. Tableau de bord, qui est fabriqué suivant un procédé selon l'une des revendications précédentes.
